# EUROPÄISCHE PATENTSCHRIFT

(11) **EP 3 172 611 B1**
(45) Veröffentlichungstag und Bekanntmachung des Hinweises auf die Patenterteilung: **29.01.2020**
(21) Anmeldenummer: 15738928.9
(22) Anmeldetag: 20.07.2015
(51) Int. Cl.: G02B 21/36, G02B 27/58, G02B 21/06

(54) **VERFAHREN UND VORRICHTUNG ZUM ABBILDEN EINES OBJEKTS**
METHOD AND DEVICE FOR IMAGING AN OBJECT
PROCÉDÉ ET DISPOSITIF DE FORMATION D'UN OBJET

(30) Priorität: 22.07.2014 DE 102014110302
(43) Veröffentlichungstag der Anmeldung: 31.05.2017
(73) Patentinhaber: Carl Zeiss Microscopy GmbH, 07745 Jena (DE)
(72) Erfinder: STOPPE, Lars, 07743 Jena (DE); HUSEMANN, Christoph, 07749 Jena (DE)
(74) Vertreter: Neusser, Sebastian
(86) Internationale Anmeldenummer: PCT/EP2015/066529
(87) Internationale Veröffentlichungsnummer: WO 2016/012391

(56) Entgegenhaltungen:
- US-A1- 2003 179 919
- US-A1- 2014 118 529
- GUOAN ZHENG ET AL: "Wide-field, high-resolution Fourier ptychographic microscopy", NATURE PHOTONICS, Bd. 7, Nr. 9, 28. Juli 2013 (2013-07-28), Seiten 739-745, XP055181687, ISSN: 1749-4885, DOI: 10.1038/nphoton.2013.187 in der Anmeldung erwähnt
- John C Russ: "Processing images in frequency space" In: "The Image Processing Handbook, Sixth Edition", 1. Januar 2011 (2011-01-01), CRC Press, XP055201082, Seiten 337-393, Gleichungen 6.9 und 6.10; Abbildung 6.34
- RODENBURG J ET AL: "A phase retrieval algorithm for shifting illumination", APPLIED PHYSICS LETTERS, A I P PUBLISHING LLC, US, vol. 85, no. 20, 1 January 2004 (2004-01-01), pages 4795-4797, XP012063468, ISSN: 0003-6951, DOI: 10.1063/1.1823034

## Beschreibung

### Technisches Gebiet

Verschiedene Aspekte betreffen ein Verfahren zum Abbilden eines Objekts mit einer Mikroskopievorrichtung und eine entsprechende Mikroskopievorrichtung. Insbesondere betreffen verschiedene Aspekte Techniken zum Berücksichtigen von Strahlformeigenschaften eines Beleuchtungsfelds beim Bestimmen eines Ergebnisbilds.

### Hintergrund

Bei mikroskopischen Untersuchungen von Objekten sind für viele Anwendungen eine möglichst hohe Auflösung bzw. ein hohes Raum-Bandbreite-Produkt und/oder ein hoher Kontrast wünschenswert. Es sind Techniken erkannt, welche es erlauben, ein vergleichsweise hoch aufgelöstes Ergebnisbild durch Kombination mehrerer vergleichsweise niedrig aufgelöster Bilder im Ortsfrequenzraum (k-Raum) zu erhalten. Eine solche Technik ist die Fourier-Ptychographie, siehe G. Zheng et al., in Nature Photonics 7 (2013) 739 - 745. Bei diesem Verfahren wird ein zu mikroskopierendes Objekt nacheinander unter verschiedenen Beleuchtungsrichtungen partiell kohärent beleuchtet. Zu jeder Beleuchtungsrichtung wird das so beleuchtete Objekt mit einem Mikroskop abgebildet und aufgenommen und das so erfasste Bild abgespeichert (Bilderfassung). Auf diese Weise wird ein Stapel von Bildern erhalten, wobei jedem Bild eine andere Beleuchtungsrichtung zugeordnet ist und die Bilder eine vergleichsweise niedrige Auflösung aufweisen. Mit diesem Stapel an Bildern wird dann mittels eines iterativen Algorithmus, zum Beispiel einem Fehler-Verringerungsalgorithmus, einem Hybrid-Input-Output-Algorithmus, und/oder einem Gerchberg-Saxton-Algorithmus, eine Phasen- und Amplitudenverteilung des Objekts errechnet (Bildauswertung). Diese kann als Ergebnisbild abgespeichert und dargestellt werden, welches eine vergleichsweise hohe Auflösung aufweist. Statt dem Objekt selbst wird dabei ein Spektrum des Objekts durch den Algorithmus rekonstruiert, sodass die Phasen- und Amplitudenverteilung des Objekts durch eine weitere Fourier-Transformation erhalten werden kann.

Bei einer in der oben genannten Veröffentlichung von G. Zheng et al. verwendeten Vorrichtung zur Fourier-Ptychographie werden die verschiedenen Beleuchtungsrichtungen durch eine matrixförmige Leuchtdiodenanordnung bzw. ein Leuchtdioden(LED)-Array als Beleuchtungsvorrichtung unterhalb des Objekts realisiert, wobei ein Mikroskop das Objekt dann in Transmission abbildet. Der Arbeitsabstand zwischen dem LED-Array und dem Objekt ist dabei derart gewählt, dass jede einzelne LED einen ausreichend hohen Kohärenzgrad aufweist. Durch das sequentielle Anschalten einzelner LEDs können die Bilder mit verschiedenen Beleuchtungsrichtungen erfasst werden.

Diese Herangehensweise zur Beleuchtung weist jedoch verschiedene Nachteile auf. So ist die Ausleuchtung des Objekts bei bestimmten Beleuchtungsrichtungen nur eingeschränkt homogen, insbesondere wenn sich die Beleuchtungsrichtungen stark unterscheiden. Stark ausgelenkte Beleuchtungsrichtungen durch LEDs am Rand des LED-Arrays entsprechen typischerweise einer größeren Entfernung der LED zum Objekt und führen damit zu einer verminderten Lichtleistung. Zudem sind ein für ein derartiges LED-Array erforderlicher Bauraum und ein erforderlicher Abstand zwischen dem LED-Array und dem Objekt relativ groß. Schließlich lässt sich eine derartige Beleuchtungstechnik nicht auf einfache Weise in bestehende Beleuchtungskonzepte klassischer Mikroskope integrieren. Insbesondere kann sie nicht als Zusatzmodul eingesetzt werden, mit dem zwischen herkömmlicher inkohärenter Beleuchtung und kohärenter Beleuchtung aus verschiedenen Beleuchtungsrichtungen umgeschaltet werden kann.

Im Allgemeinen kann sich beim Anwenden der Techniken der Fourier-Ptychographie eine Imperfektion der Beleuchtungsvorrichtung - wie z.B. eingeschränkte Kohärenz des Lichts, inhomogene Ausleuchtung, nur eingeschränkte Wahl von Beleuchtungsrichtungen, sonstige Aberrationen von Beleuchtungsfeldern etc. - negativ auf eine Qualität des Ergebnisbilds auswirken. Häufig kann es aber notwendig sein, solche Einschränkungen in der Qualität der Beleuchtungsvorrichtung in Kauf zu nehmen, um eine praktisch einsetzbare Beleuchtungsvorrichtung zu erhalten. Dann kann es wiederum nicht oder nur eingeschränkt möglich sein, die herkömmlichen Techniken der Fourier-Ptychographie zur Bildauswertung zu verwenden. Insbesondere kann es vorkommen, dass eine Qualität des Ergebnisbilds reduziert ist.

### Zusammenfassung

Deshalb besteht ein Bedarf für verbesserte Techniken zum Bestimmen eines Ergebnisbilds basierend der Fourier-Ptychographie. Insbesondere besteht ein Bedarf für solche Techniken, die auch bei Imperfektionen der Beleuchtungsvorrichtung eine vergleichsweise hohe Qualität des Ergebnisbilds ermöglichen. Es besteht ein Bedarf für solche Techniken zum Bestimmen eines Ergebnisbilds basierend auf der Fourier-Ptychographie, die zuverlässige und gute Ergebnisse bei Anwendung in verschiedensten Mikroskopievorrichtungen ermöglichen. Es besteht auch ein Bedarf für solche Techniken, die eine vergleichsweise einfache und / oder baulich-strukturell wenig komplexe Beleuchtungsvorrichtung im Zusammenhang mit Techniken der Fourier-Ptychographie ermöglichen.

Diese Aufgabe wird von den Merkmalen der unabhängigen Ansprüche gelöst. Die abhängigen Ansprüche definieren Ausführungsformen.

Gemäß einem Aspekt betrifft die Anmeldung ein Verfahren zum Abbilden eines Objekts mit einer Mikroskopievorrichtung. Das Verfahren umfasst das Erhalten von mindestens zwei Bildern des Objekts. Die mindestens zwei Bilder des Objekts weisen eine erste Auflösung auf. Den mindestens zwei Bildern ist jeweils ein Beleuchtungsfeld zugeordnet, welches bei Bilderfassung des jeweiligen Bilds das Objekt beleuchtet. Das jeweilige Beleuchtungsfeld ist mit vorgegebenen Strahlformeigenschaften assoziiert. Das Verfahren umfasst für jedes der mindestens zwei Bilder folgenden Schritt zu Bildauswertung: Hinzufügen einer Wirkung der Strahlformeigenschaften des jeweils zugeordneten Beleuchtungsfelds zu einer vorgegebenen Approximation des Objekts im Bildraum, wobei die Approximation eine zweite Auflösung aufweist, die größer als die erste Auflösung ist. Das Verfahren umfasst weiterhin für jedes der mindestens zwei Bilder folgenden Schritt zu Bildauswertung: Anpassen der Approximation mittels Techniken der Fourier-Ptychographie im k-Raum basierend auf dem jeweiligen erfassten Bild. Das Verfahren umfasst weiterhin für jedes der mindestens zwei Bilder folgenden Schritt zu Bildauswertung: Entfernen der Wirkung der Strahlformeigenschaften des jeweiligen Beleuchtungsfeld aus der angepassten Approximation des Objekts im Bildraum zum Erhalten eines Zwischenbilds. Das Verfahren umfasst weiterhin das Bestimmen eines Ergebnisbilds basierend auf den Zwischenbildern, die den mindestens zwei Beleuchtungsfeldern zugeordnet sind.

Es wäre z.B. möglich, dass das Verfahren weiterhin für jedes der mindestens zwei Bilder umfasst: Beleuchten des Objekts mit dem jeweiligen Beleuchtungsfeld durch Betreiben einer Beleuchtungsvorrichtung der Mikroskopievorrichtung und Erfassen des jeweiligen Bilds des Objekts während dem Beleuchten mit dem jeweiligen Beleuchtungsfeld mit einem Detektor. Das Verfahren kann also weiterhin Schritte zur Bilderfassung umfassen. Es wäre aber auch möglich, dass die Bildauswertung z.B. in einem größeren zeitlichen Abstand nach der Bilderfassung durchgeführt wird.

Z.B. kann das Anpassen der Approximation weiterhin umfassen: Propagieren der Approximation aus dem Bildraum in den k-Raum. Das Anpassen der Approximation kann weiterhin umfassen: Rückpropagieren der angepassten Approximation aus dem k-Raum in den Bildraum. Z.B. kann das (Rück-)Propagieren zwischen Bildraum und k-Raum mittels Techniken der Fourier-Transformation bzw. der inversen Fourier-Transformation geschehen.

Grundsätzlich können die Strahlformeigenschaften der Beleuchtungsfelder nicht besonders beschränkt sein. Die Strahlformeigenschaften der Beleuchtungsfelder können einen Satz von Parametern beschreiben, die geeignet sind, das Beleuchtungsfeld festzulegen. Das umfasst typischerweise, ist aber nicht beschränkt auf: eine ortsabhängige Amplitude und / oder Phase des Beleuchtungsfelds; und / oder eine Form der Apertur einer Beleuchtungsvorrichtung der Mikroskopievorrichtung; und / oder eine Beleuchtungsrichtung in Bezug auf das Objekt; und / oder einen Astigmatismus; und / oder eine Wölbung; und / oder eine Verzeichnung.

Das Hinzufügen bzw. das Entfernen der Strahlformeigenschaften kann auf unterschiedliche Art und Weise geschehen. Insbesondere kann eine Art und Weise des Hinzufügens bzw. des Entfernens abhängen von einer Art der Notation oder Darstellung des Beleuchtungsfelds, z.B. in einem Speicher der Mikroskopievorrichtung. In einer Implementierung kann z.B. das Hinzufügen der Strahlformeigenschaften einem komplexwertigen Multiplizieren des Beleuchtungsfelds mit der Approximation entsprechen. Entsprechend wäre es möglich, dass das Entfernen der Strahlformeigenschaften einem komplexwertigen Dividieren des Beleuchtungsfelds mit der Approximation entspricht. Es sind auch andere Rechenoperationen, z.B. Addieren, Subtrahieren, Falten, usf. denkbar.

Durch das Berücksichtigen der Strahlformeigenschaften der jeweiligen Beleuchtungsfelder, die den mindestens zwei Bildern zugeordnet sind, können verschiedene Effekte erzielt werden. Eine Möglichkeit der Diversifizierung der Beleuchtungsfelder kann durch Veränderung verschiedenster Strahlformeigenschaften, insbesondere nicht nur der Beleuchtungsrichtung, gegeben sein. Damit kann es z.B. möglich sein, bei einer gleichen Anzahl von Bildern eine besonders starke Diversifizierung durch Veränderung mehrerer Strahlformeigenschaften zu erreichen und damit ein qualitativ besonders hochwertiges Ergebnisbild zu bestimmen; es wäre auch möglich, eine besonders große Anzahl von Bildern zu berücksichtigen, da ein Parameterraum der Strahlformeigenschaften, innerhalb dessen die Strahlformeigenschaften variiert werden können, besonders groß ist. Auch dadurch kann die Qualität des Ergebnisbilds erhöht werden. In anderen Worten kann es möglich sein, durch gezielte Auswahl und Manipulation von Strahlformeigenschaften die Qualität des Ergebnisbilds zu erhöhen. Hierbei stehen vergleichsweise viele Freiheitsgrade bei Auswahl und Manipulation zur Verfügung; der Parameterraum ist entsprechend groß.

Als weiterer Effekt kann es möglich sein, bestimmte vorgegebene Einschränkungen bzw. Rahmenbedingungen im Parameterraum der Strahlformeigenschaften - z.B. nicht implementierbare Beleuchtungsrichtungen und / oder technisch bedingte Aberrationen - zu berücksichtigen und deren unerwünschten Einfluss auf das Ergebnisbild zu reduzieren. In anderen Worten kann es möglich sein, bestimmte vorgegebene Rahmenbedingungen der Beleuchtungsfelder zu berücksichtigen und dennoch ein qualitativ hochwertiges Ergebnisbild zu bestimmen. So können - z.B. neben dem Erfordernis, dass die Beleuchtungsfelder das Objekt komplett ausleuchten - die Beleuchtungsfelder hinsichtlich verschiedenster Strahlformeigenschaften variabel sein; auch bestimmte Einschränkungen, wie z.B. eine zwangsläufige inhomogene Ausleuchtung, können tolerierbar sein. Solche Einschränkungen können z.B. baulich und/oder technisch durch die verwendete Mikroskopievorrichtung, bzw. die verwendete Beleuchtungsvorrichtung vorgegeben sein. Z.B. kann es mittels der beschriebenen Techniken möglich sein, auch solche Situationen zu berücksichtigen, in denen die Beleuchtungsfelder keinen Planwellen entsprechen. Insbesondere können derart Mikroskopievorrichtungen verwendet werden, welche einen vergleichsweise geringen Abstand zwischen einer Beleuchtungsquelle und dem Objekt verwenden. Es kann hier auch entbehrlich sein, durch Verwendung besonders vieler und/oder hochwertiger optischer Elemente eine besonders gut korrigierte Beleuchtungsvorrichtung einzusetzen, z.B. für hochaperturige Beleuchtungen. In anderen Worten kann es möglich sein, mit verschiedensten Mikroskopievorrichtungen, die keine erhöhten technischen Anforderungen erfüllen müssen, eine vergleichsweise gute Qualität des Ergebnisbilds zu gewährleisten. Insbesondere kann eine vergleichsweise einfachere Realisierung der Mikroskopievorrichtung erreicht werden, da keine ebenen Beleuchtungswellen generiert werden müssen. Dies kann z.B. eine kostengünstigere, wenigre fehleranfällige, robustere und / oder platzsparendere Umsetzung der Mikroskopievorrichtung und insbesondere der zugehörigen Beleuchtungsvorrichtung ermöglichen.
Z.B. kann die vorgegebene Approximation in einem Speicher hinterlegt sein. Es wäre auch möglich, dass die vorgegebene Approximation durch einen Benutzer bestimmt wird. Die vorgegebene Approximation könnte alternativ oder zusätzlich auch anhand eines Referenzbilds bestimmt werden. Es ist möglich, dass auch das Ergebnisbild und / oder die Zwischenbilder die zweite Auflösung aufweist.

Das Verfahren kann dann das iterative Anpassen der Approximation anhand der mindestens zwei Abbilder umfassen. So kann die vorgegebene Approximation, die für die Bildauswertung eines ersten Bilds des Objekts verwendet wird, dem Zwischenbild entsprechen, das durch die Bildauswertung eines zweiten Bilds erhalten wird. In anderen Worten, kann also die Ausgabe der Bildauswertung für das erste Bild der Eingabe in die Bildauswertung für das zweite Bild entsprechen. Es ist möglich, dass derart die Approximation des Objekts durch die Bildauswertung für alle der mindestens zwei Bilder propagiert wird und derart iterativ verbessert wird, d.h. in größere Übereinstimmung mit einem tatsächlichen Abbild des Objekts gebracht wird.

Die Bildauswertung kann auch, z.B. für alle der mindestens zwei Bilder, mehrfach wiederholt werden; dies kann durch eine entsprechende Laufzahl quantifiziert werden. Hierbei kann die Bildauswertung sequentiell für die mindestens zwei Bilder in einer festen Reihenfolge geschehen oder aber auch in einer variablen Reihenfolge, die z.B. unterschiedlich für verschiedene Iterationen ist. Z.B. kann es möglich sein, die Schritte zur Bildauswertung solange für die mindestens zwei Bilder zu wiederholen, bis ein vorgegebenes Konvergenzkriterium erfüllt ist. Z.B. kann das vorgegebene Konvergenzkriterium die Zwischenbilder betreffen. Das Konvergenzkriterium kann z.B. aus folgender Gruppe ausgewählt sein: Änderung in den Zwischenbildern geringer als ein vorgegebener Schwellenwert; Laufzahl der Wiederholungen überschreitet vorgegebenen Schwellenwert. Z.B. könnte der vorgegebene Schwellenwert für die Laufzahl zwei oder drei oder fünfzig oder hundert betragen. Durch das mehrfache Wiederholen der Bildauswertung für die mindestens zwei Bilder kann eine Qualität des Ergebnisbildes erhöht werden. Die Änderungen in den Zwischenbildern können z.B. pro Pixel betrachtet werden und / oder gemittelt auf jeweils das gesamte Zwischenbild betrachtet werden.

Grundsätzlich sind dem Fachmann die Techniken der Fourier-Ptychographie bekannt, z.B. aus dem eingangs genannten Artikel von G. Zheng et al. Hierbei ist es für die Implementierung der vorliegend beschriebenen Techniken nicht notwendig, dass alle verschiedenen Schritte der von G.Zheng beschriebenen Methodik durchgeführt werden. Im Allgemeinen können die Techniken der Fourier-Ptychographie Bildpunktwerte der Approximation in einem bestimmten Bereich durch Bildpunktwerte des erfassten Bilds des Objekts ersetzen. Der bestimmte Bereich entspricht z.B. einer Systempupille des jeweiligen Beleuchtungsfelds. Die Form der Systempupille kann typischerweise von einer Form einer Apertur einer Beleuchtungsvorrichtung der Mikroskopievorrichtung abhängigen. Die Position der Systempupille im k-Raum kann typischerweise von einem Beleuchtungswinkel des jeweiligen Beleuchtungsfelds abhängen. Der Beleuchtungswinkel kann z.B. in Bezug zu einer optischen Achse der Mikroskopievorrichtung quantifiziert sein.

Voranstehend wurden also Techniken illustriert, die ein Bestimmen des Ergebnisbilds basierend auf Techniken der Fourier-Ptychographie unter gleichzeitiger Berücksichtigung von Strahlformeigenschaften des jeweiligen Beleuchtungsfelds ermöglichen. Diese Techniken können auch als Abwandlung des Gerchberg-Saxton-Algorithmus bezeichnet werden. Insbesondere erfolgt - z.B. im Vergleich zur Technik gemäß G. Zheng - eine Rekonstruktion des Objekts durch Bildauswertung im Bildraum - und nicht im k-Raum. Denn es wird die Wirkung der Strahlformeigenschaften jeweils im Bildraum zur Approximation hinzugefügt bzw. entfernt. Die Zwischenbilder werden also im Bildraum propagiert. Dies kann es ermöglichen, die Strahlformeigenschaften besonders umfassend und besonders genau zu berücksichtigen, was sich wiederum in einer erhöhten Qualität des Ergebnisbilds niederschlagen kann. Insbesondere kann es möglich sein, die Strahlformeigenschaften vergleichsweise wenig rechenintensiv zu berücksichtigen. Dies ist der Fall, da typischerweise die Strahlformeigenschaften bzw. deren Wirkung im Bildraum vorgegeben ist und z.B. ein Umrechnen in den k-Raum entfällt.

Im Allgemeinen können verschiedenste Strahlformeigenschaften berücksichtigt werden. Z.B. wäre es möglich, dass die ortsabhängige Amplitude des Beleuchtungsfelds durch eine gaußförmige Funktion beschrieben wird. Es wäre alternativ oder zusätzlich auch möglich, dass die ortsabhängige Amplitude des Beleuchtungsfelds durch eine nicht-köhlersche Beleuchtungsvorrichtung der Mikroskopievorrichtung und/oder durch die Beleuchtungsvorrichtung der Mikroskopievorrichtung mit kritischer Beleuchtung vorgegeben ist. Bei der kritischen Beleuchtung kann z.B. ein Kollektor das Bild der Lichtquelle in eine Präparationsebene abbilden. Insbesondere kann es also entbehrlich sein, dass die ortsabhängige Amplitude des Beleuchtungsfelds im Bereich des Objekts im Wesentlichen konstant ist (homogene Ausleuchtung). Auch kann es entbehrlich sein, dass eine Phase des Beleuchtungsfelds im Bereich des Objekts im Wesentlichen konstant ist. Insbesondere können auch Beleuchtungsvorrichtungen verwendet werden, welche keine ebenen Planwellen und keine homogene Ausleuchtung des Objekts bereitstellen. Derart kann erreicht werden, dass die Mikroskopievorrichtung mit weniger optischen Elementen auskommt und damit kostengünstiger und robuster bereitgestellt werden kann. Gleichzeitig kann es möglich sein, dass die Mikroskopievorrichtung weniger Bauraum benötigt und kleiner hergestellt werden kann. Ferner kann es einfacher möglich sein, die Beleuchtungsvorrichtung als Zusatzmodul für unterschiedliche Mikroskopievorrichtungen bereit zu stellen.

Es wäre auch möglich, dass die Form der Apertur durch eine Zoomvorrichtung der Mikroskopievorrichtung für die mindestens zwei Beleuchtungsfelder vorgegeben wird. Z.B. kann es mittels der Zoomvorrichtung möglich sein, die Form der Apertur zielgerichtet einzustellen. Derart kann es möglich sein, die Strahlformeigenschaften für verschiedene der mindestens zwei Bilder zielgerichtet durch Verändern der Form der Apertur zu verändern. Insbesondere kann es möglich sein - z.B. anstatt oder zusätzlich zu verschiedenen Beleuchtungsrichtungen -die Form der Apertur zu ändern, und so einen zugänglichen Parameterraum der Strahlformeigenschaften zu vergrößern. Dies kann insbesondere eine Qualität des Ergebnisbildes erhöhen.

Z.B. könnte die Form der Apertur in Abhängigkeit von Beleuchtungsrichtungen der mindestens zwei Beleuchtungsfelder vorgegeben werden. Derart kann es möglich sein, dass sich die Systempupillen von jeweils zwei der mindestens zwei Beleuchtungsfelder wechselseitig überlappen, z.B. in einem Überlappbereich. Insbesondere kann es erstrebenswert sein, dass sich die verschiedenen Systempupillen bzw. k-Raum-Felder jeweils paarweise überlappen. Ein Überlapp kann jedenfalls numerisch im k-Raum vorliegen. In einem solchen Fall kann es möglich sein, dass das Konvergenzkriterium möglichst bald erreicht wird, wodurch Rechenkapazitäten verringert werden können und die Qualität des Ergebnisbildes erhöht werden kann.

Es ist insbesondere möglich, dass zumindest einige oder alle der mindestens zwei Beleuchtungsfelder mit gleichen Beleuchtungsrichtungen assoziiert sind, die mit der optischen Achse der Mikroskopievorrichtungen einen endlichen Winkel einschließen. In anderen Worten kann es möglich sein, dass z.B. für ein oder mehrere der mindestens zwei Beleuchtungsfelder eine Beleuchtung des Objekts aus gleichen Beleuchtungsrichtungen stattfindet; gleichzeitig wäre es möglich, dass weitere Strahlformeigenschaften für die Beleuchtung mit den Beleuchtungsfeldern mit gleicher Beleuchtungsrichtung variiert werden.

Grundsätzlich kann es gemäß den voranstehend beschriebenen Techniken erstrebenswert sein, dass die verschiedenen Strahlformeigenschaften bzw. deren Wirkung auf die Approximation bekannt sind. In einer einfachen Implementierung wäre es z.B. möglich, dass die verschiedenen Strahlformeigenschaften für die mindestens zwei Beleuchtungsfelder fest vorgegeben sind und eine Wirkung der Strahlformeigenschaften z.B. in einem Speicher der Mikroskopievorrichtung hinterlegt ist. Es wäre aber auch möglich, dass die Strahlformeigenschaften dynamisch bestimmt werden. Z.B. kann es möglich sein, dass das Verfahren weiterhin umfasst: Durchführen einer Kalibrationssequenz zum Bestimmen der Strahlformeigenschaften der mindestens zwei Beleuchtungsfelder. Z.B. kann im Rahmen der Kalibrationssequenz ein Kalibrationsbild erfasst werden, ohne dass sich ein Objekt im Strahlengang der Mikroskopievorrichtung befindet. Es wäre alternativ oder zusätzlich auch möglich, dass im Rahmen der Kalibrationssequenz ein Kalibrationsbild erfasst wird, wobei sich während des Erfassens ein vorbekanntes Kalibrationsobjekt im Strahlengang der Mikroskopievorrichtung befindet. Z.B. kann das Kalibrationsobjekt ein Phasengitter sein. Dieses kann eine bestimmte Periodizität aufweisen. Das Kalibrationsobjekt kann z.B. mit monochromatischem Licht einer vorgegebenen Wellenlänge beleuchtet werden.

Gemäß einem weiteren Aspekt betrifft die vorliegende Anmeldung eine Mikroskopievorrichtung, die zum Abbilden eines Objekts eingerichtet ist. Die Mikroskopievorrichtung umfasst eine Recheneinheit, die eingerichtet ist, mindestens zwei Bilder des Objekts zu erhalten. Die mindestens zwei Bilder weisen eine erste Auflösung auf. Den mindestens zwei Bildern ist jeweils ein Beleuchtungsfeld zugeordnet, das bei Bilderfassung des jeweiligen Bilds das Objekt beleuchtet und das mit vorgegebenen Strahlformeigenschaften assoziiert ist. Die Recheneinheit ist weiterhin eingerichtet, um für jedes der mindestens zwei Bilder folgende Schritte zur Bildauswertung durchzuführen: Hinzufügen einer Wirkung der Strahlformeigenschaften des jeweils zugeordneten Beleuchtungsfeldes zu einer vorgegebenen Approximation des Objekts im Bildraum, wobei die Approximation eine zweite Auflösung aufweist, die größer als die erste Auflösung ist; und Anpassen der Approximation mittels Techniken der Fourier-Ptychographie basierend auf dem jeweiligen erfassten Bild; und Entfernen der Wirkung der Strahlformeigenschaften des jeweiligen Beleuchtungsfelds aus der angepassten Approximation des Objekts im Bildraum zum Erhalten eines Zwischenbilds. Die Recheneinheit ist weiterhin eingerichtet, um ein Ergebnisbild basierend auf den Zwischenbildern, die den mindestens zwei Beleuchtungsfeldern zugeordnet sind, zu bestimmen.

Z.B. kann die Mikroskopievorrichtung gemäß dem gegenwärtig diskutierten Aspekt eingerichtet sein, um das Verfahren zum Abbilden eines Objekts gemäß einem weiteren Aspekt durchzuführen.

Für eine solche Mikroskopievorrichtung gemäß dem gegenwärtig diskutierten Aspekt können Effekte erzielt werden, die vergleichbar sind mit den Effekten, die für das Verfahren zum Abbilden eines Objekts gemäß einem weiteren Aspekt erzielt werden können.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### Kurze Beschreibung der Figuren

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.
FIG. 1 illustriert drei Beleuchtungsfelder und assoziierte Strahlformeigenschaften schematisch.
FIG. 2 zeigt einen Stapel von Bildern, die durch Beleuchtung eines Objekts mit den drei Beleuchtungsfeldern erhalten werden, wobei die drei Bilder eine erste Auflösung aufweisen.
FIG. 3 zeigt ein Ergebnisbild, das basierend auf Techniken der Fourier-Ptychographie und basierend auf den Bildern bestimmt wird, wobei das Ergebnisbild eine zweite Auflösung aufweist, die größer als die erste Auflösung ist.
FIG. 4 illustriert in Form eines Isokonturplots eine ortsabhängige Amplitude eines der Beleuchtungsfelder im Detail.
FIG. 5 zeigt eine Mikroskopievorrichtung, die eine Beleuchtungsvorrichtung umfasst.
FIG. 6 ist ein Flussdiagramm eines Verfahrens zum Bestimmen des Ergebnisbilds.
FIG. 7 ist ein Flussdiagramm, welches Schritte der Bildauswertung gemäß dem Verfahren nach FIG. 6 in größerem Detail illustriert.

### Detaillierte Beschreibung von Ausführungsformen

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken beschrieben, die das Bestimmen eines hoch aufgelösten Ergebnisbilds basierend auf niedrig aufgelösten Bildern ermöglicht. Dabei werden Techniken der Fourier-Ptychographie angewendet. Insbesondere werden Strahlformeigenschaften von Beleuchtungsfeldern, die zur Beleuchtung des Objekts beim Erfassen der Bilder verwendet werden, berücksichtigt. Dabei nutzen die beschriebenen Techniken aus, dass - neben verschiedenen Beleuchtungsrichtungen, wie bei der herkömmlichen Fourier-Ptychographie - verschiedene weitere Strahlformeigenschaften zur Diversifizierung der Beleuchtungsfelder berücksichtigt werden können.

Bei der Berücksichtigung der Strahlformeigenschaften sind insbesondere zwei erzielbare Effekte denkbar. Erstens: Aberrationskorrektur. Hierbei kann eine Beleuchtung des Objekts aus unterschiedlichen Beleuchtungsrichtungen mithilfe einer Beleuchtungsvorrichtung der entsprechenden Mikroskopievorrichtung geschehen. Typischerweise ist eine solche Beleuchtung des Objekts mit Aberrationen versehen. Z.B. können nicht ideal ebene Wellen, sondern verschiedenen Strahlformen aus unterschiedlichen Beleuchtungsrichtungen das Objekt beleuchten. Z.B. können Beleuchtungsaberrationen entstehen, wenn ebene LED-Arrays oder eine Ebene Verschiebungsvorrichtung eines Pinholes in gekrümmten Beleuchtungspupillen angebracht werden. Solche oder andere Aberrationen können in den hier beschriebenen Techniken berücksichtigt werden und deren Wirkung kann insbesondere durch geeignete Bildauswertung nachträglich reduziert werden. Neben Aberrationen in der Beleuchtung können in den hierin beschriebenen Techniken auch Aberrationen einer Detektionsoptik der Mikroskopievorrichtung berücksichtigt werden. Auch deren Wirkung kann im Rahmen einer Bildauswertung reduziert werden. Zweitens: Diversifizierung der veränderten Strahlformeigenschaften. Insbesondere kann es mittels der hierin beschriebenen Techniken möglich sein, eine Diversifizierung der variierten Strahlformeigenschaften nicht nur über verschiedene Beleuchtungsrichtungen zu erreichen, sondern alternativ oder zusätzlich auch durch eine im Allgemeinen variable Strahlformung der Beleuchtungsfelder. Hierbei kann die Strahlformung auf verschiedene Arten erfolgen. Z.B. kann es möglich sein, mit einem Zoomsystem der Beleuchtungsvorrichtung einen detektierten Frequenzraum zu strecken oder zu stauchen. Z.B. wäre es möglich, allein basierend auf einer solchen Variation des Parameters des detektierten Frequenzraums bzw. der verwendeten Apertur, eine Bestimmung des Ergebnisbilds durchzuführen. Eine solche Variation der Strahlformeigenschaften kann aber auch z.B. mit verschiedenen Beleuchtungsrichtungen kombiniert werden, z.B. indem ein oder zwei Tiltspiegel oder ein verschiebbares Pinhole in der Beleuchtungsvorrichtung verwendet wird. Es ist natürlich auch möglich, eine Beleuchtungsvorrichtung basierend auf einem LED-Array gemäß der eingangs genannten Publikation von G. Zheng zu verwenden. Hierbei kann aber - durch die zusätzliche Vergrößerung eines Parameterraums der Strahlformeigenschaften - eine Anzahl der benötigten Beleuchtungsrichtungen für eine bestimmte zu erreichende Qualität des Ergebnisbilds reduziert werden. Die hierin beschriebenen Techniken ermöglichen also - alternativ oder zusätzlich zur voranstehenden Korrektur von Aberrationen - auch den Einsatz verschiedenster Mikroskopievorrichtungen mit verschiedenen Freiheitsgraden von Strahlformeigenschaften.

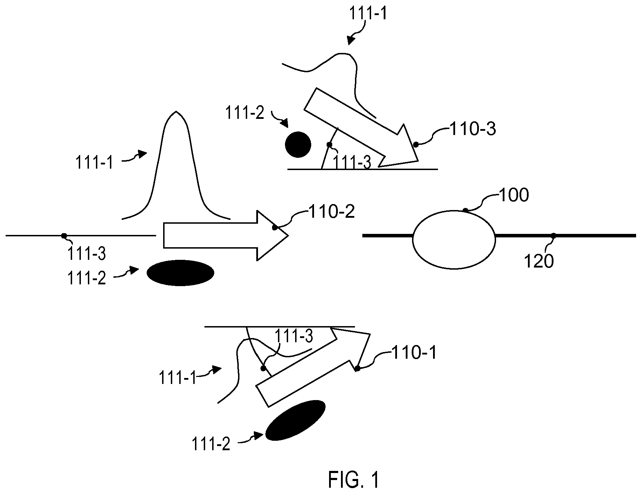

In FIG. 1 sind drei Beleuchtungsfelder 110-1, 110-2, 110-3 anhand von Pfeilen dargestellt. Die Beleuchtungsfelder 110-1 - 110-3 beleuchten ein Objekt 100. Die drei Beleuchtungsfelder 110-1 - 110-3 weisen unterschiedliche Beleuchtungsrichtungen 111-3 auf, was in FIG. 1 durch Winkel gegenüber derjenigen Achse 120, entlang derer ein Lichtstrahl von der Beleuchtungsvorrichtung zum Detektor keine oder keine signifikante Ablenkung erfährt (optische Achse), dargestellt ist. Aus FIG. 1 ist ersichtlich, dass das erste und dritte Beleuchtungsfeld 110-1, 110-3 einen endlichen Winkel mit der optischen Achse 120 einschließen. Das zweite Beleuchtungsfeld 110-1 ist parallel zur optischen Achse 120 orientiert. Ferner weisen die drei Beleuchtungsfelder 110-1 - 110-3 eine unterschiedliche Apertur 111-2 auf. Z.B. weist das erste Beleuchtungsfeld 110-1 eine ellipsenförmige Apertur 111-2 auf. Auch das zweite Beleuchtungsfeld 110-2 weist eine ellipsenförmige Apertur 111-2 auf. Das dritte Beleuchtungsfeld 110-3 weist eine kreisförmige Apertur 111-2 auf, welche auch eine größere numerische Blendenzahl (NA) aufweist. Solche unterschiedlichen Formen der Apertur können z.B. durch eine Zoomvorrichtung der Mikroskopievorrichtung für die verschiedenen Beleuchtungsfelder 110-1 - 110-3 variabel eingestellt werden. Ferner ist aus FIG. 1 ersichtlich, dass die drei Beleuchtungsfeld 110-1 - 110-3 eine Amplitude 111-1 mit unterschiedlichen Ortsabhängigkeiten aufweisen. Die Amplituden 111-1 der drei Beleuchtungsfelder 110-1 - 110-3 sind gaußförmig. Ein Maximalwert der Amplitude 111-1 ist größer (kleiner) für das zweite Beleuchtungsfeld 110-2 (für das erste und dritte Beleuchtungsfeld 110-1, 110-3). Die Ortsabhängigkeit der Amplitude 111-1 bewirkt, dass das Objekt 100 komplett beleuchtet wird, also die Amplitude im Bereich des Objekts 100 endliche Werte annimmt; jedoch variiert die Amplitude, das Objekt 100 wird also inhomogen beleuchtet wird. Ein weiterer Parameter der Ortsabhängigkeit der Amplitude 111-1, der im Rahmen der Strahlformeigenschaften 111-1 - 111-3 der Beleuchtungsfelder 110-1 - 110-3 angepasst werden könnte, wäre z.B. eine Halbwertsbreite der gaußförmigen Ortsabhängigkeit. Es wäre auch möglich, im Rahmen der Strahlformeigenschaften 111-1 - 111-3 eine Ortsabhängigkeit einer Phase der jeweiligen Beleuchtungsfelder 110-1 - 110-3 zu variieren, z.B. eine bestimmte Änderung der Phase über dem Ort und damit nicht-ebene Beleuchtungswellen zu implementieren. Eine solche ortsabhängige Amplitude 111-1 und/oder ortsabhängige Phase des Beleuchtungsfelds 110-1 - 110-3 kann z.B. durch eine nicht-köhlersche Beleuchtungsvorrichtung und/oder durch eine Beleuchtungsvorrichtung mit kritischer Beleuchtung implementiert werden. Weitere Strahlformeigenschaften 111-1 - 111-3, die berücksichtigt werden können, wären z.B. ein Astigmatismus, eine Wölbung oder eine Verzeichnung der Beleuchtungsfelder 110-1 - 110-3.

Zum Durchführen der nachfolgend im Detail beschriebenen Techniken kann es erstrebenswert sein, wenn möglichst viele der verschiedenen Strahlformeigenschaften 111-1 - 111-3 der Beleuchtungsfelder 110-1 - 110-3 bekannt sind, z.B. insbesondere quantifiziert werden können. Z.B. kann es möglich sein, dass die verschiedenen Strahlformeigenschaften 111-1 - 111-3 in einem entsprechenden Speicher der Mikroskopievorrichtung hinterlegt sind und von dort abgerufen werden können. Dann können die verschiedenen Strahlformeigenschaften 111-1 - 111-3 z.B. einmal einprogrammiert werden, z.B. in Abhängigkeit der spezifischen Konstruktion und Ausstattung der Mikroskopievorrichtung. Es wäre aber auch möglich, dass im Rahmen einer Kalibrationssequenz die verschiedenen Strahlformeigenschaften 111-1 - 111-3 bestimmt werden, z.B. kurz vor der Bilderfassung. Derart können auch dynamische Aspekte, z.B. Drifts etc., berücksichtigt werden.

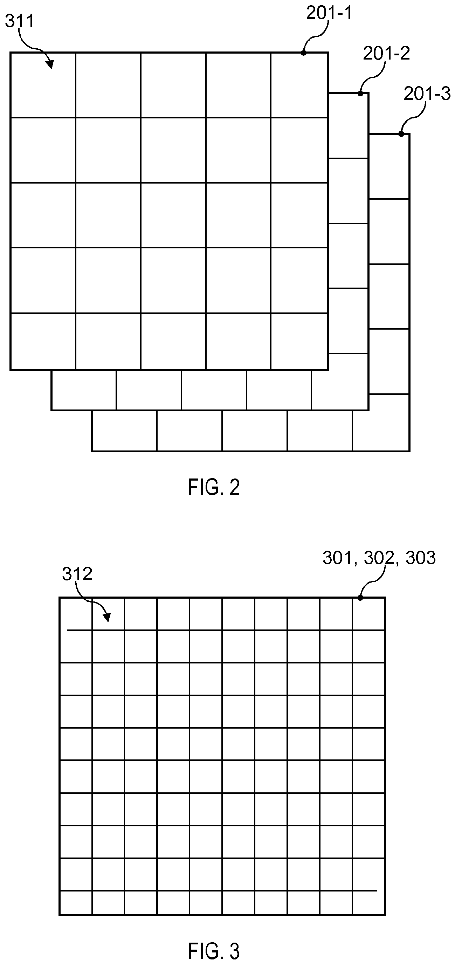

Es ist dann möglich, das Objekt 100 im Rahmen einer Bilderfassung mit den drei Beleuchtungsfeldern 110-1-110-3 zu beleuchten. Für jedes der Beleuchtungsfelder 110-1 - 110-3 kann ein entsprechendes Bild 201-1 - 201-3, wie in FIG. 2 dargestellt, erfasst werden. Die Bilder 201-1 - 201-3 können z.B. Intensitätsbilder sein. Z.B. kann für das erste Beleuchtungsfeld 110-1 das erste Bild 201-1 erfasst werden und für das zweite Beleuchtungsfeld 110-2 das zweite Bild 201-2 und für das dritte Beleuchtungsfeld 110-3 das dritte Bild 201-3 erfasst werden. Die drei Bilder 201-1 - 201-3 weisen eine erste Auflösung 311 auf. Ziel der nachfolgend beschriebenen Techniken ist es, ein Ergebnisbild 303 bereitzustellen, welches eine zweite Auflösung 312 aufweist, die größer als die erste Auflösung 311 ist (vgl. FIGs. 2 und 3). Dabei beruhen die Techniken darauf, dass zunächst eine Approximation 301 vorgegeben wird, welche dann iterativ angepasst wird, wodurch Zwischenbilder 302 erhalten werden. Auch die Approximation 301 bzw. die Zwischenbilder 302 weisen die zweite Auflösung 312 auf.

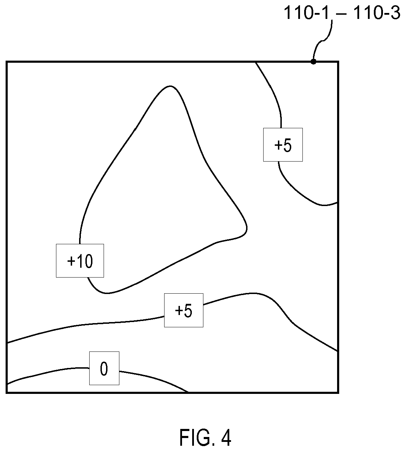

Die Techniken beruhen typischerweise darauf, dass eine Wirkung der Strahlformeigenschaften 111-1 - 111-3 der verschiedenen Beleuchtungsfelder 110-1 - 110-3 zu den, den jeweils verschiedenen Bildern 201-1 - 201-3 entsprechenden, Approximationen 301 bzw. Zwischenbildern 302 hinzugefügt bzw. entfernt wird. Dies geschieht im Bildraum. Dazu kann es erstrebenswert sein, wenn das durch die Strahlformeigenschaften 111-1 - 111-3 bestimmte jeweilige Beleuchtungsfeld 110-1 - 110-3 quantifiziert und in einem Format vorliegt, welches einfaches Hinzufügen bzw. Entfernen der entsprechenden Wirkung erlaubt. Z.B. kann - wie in FIG. 4 gezeigt - das jeweilige Beleuchtungsfeld 110-1 - 110-3 als zweidimensionale Amplitudenkarte oder Phasenkarte oder Aberrationskarte etc. vorliegen. Dann kann eine Wirkung des jeweiligen Beleuchtungsfelds 110-1 - 110-3 z.B. durch Multiplikation (Division) zur entsprechenden Approximation 301 bzw. Zwischenfeld 302 im Ortsraum hinzugefügt (entfernt) werden.

Zwischen dem Hinzufügen und dem Entfernen der Wirkung des jeweiligen Beleuchtungsfelds 110-1 - 110-3 können Techniken der Fourier-Ptychographie angewendet werden. Insbesondere können diese Techniken der Fourier-Ptychographie Bildpunktwerte der Approximation 301 in einem bestimmten Bereich durch Bildpunktwerte des jeweiligen Bilds 201-1 - 201-3 ersetzen. Allgemeiner formuliert, kann basierend auf dem jeweiligen Bild 201-1 - 201-3 die Approximation 301 verbessert werden. Der bestimmte Bereich kann einer Systempupille im k-Raum entsprechen. Die Systempupille kann dabei einer konjugierten Ebene des Objekts entsprechen.

Bei manchen Ausführungsbeispielen kann die Systempupille zudem einer Ebene eines Zwischenbildes einer Lichtquelle entsprechen. Bei anderen Ausführungsbeispielen kann die Systempupille zudem einer konjugierten Ebene der Lichtquelle entsprechen. Hierzu wird ferner Bezug genommen auf die eingangs genannte Publikation von G. Zheng, wo in der dortigen FIG. 1, untere Spalte, mittlere drei Insets, jeweils für die Beleuchtungsrichtungen mit Winkeln 0°, 0°; - 22°, -19°; und -22°; -22° Systempupillen durch gestrichelte Kreise indiziert sind.

Wie aus dieser Figur aus G. Zheng weiter zu entnehmen ist, wird der Parameterraum der Strahlformeigenschaften gemäß der Technik von G. Zheng lediglich durch verschiedene Beleuchtungsrichtungen definiert. Insbesondere sind z.B. keine variablen Größen und / oder Formen von Systempupillen möglich; es ist auch nicht möglich, Aberrationen zu berücksichtigen. Gemäß den vorliegenden Techniken wäre es z.B. möglich, die Form der Apertur in Abhängigkeit von Beleuchtungsrichtungen der mindestens zwei Beleuchtungsfelder 110-1 - 110-3 derart vorzugeben, sodass sich die Systempupillen von jeweils zwei der mindestens zwei Beleuchtungsfelder wechselseitig in einem Überlappbereich überlappen. Hierbei kann Überlappung zumindest eine numerische Überlappung bedeuten. Z.B. kann es nämlich gemäß der vorliegenden Techniken möglich sein, durch das Hinzufügen und Entfernen der Wirkung der Strahlformeigenschaften 111-1 - 111-3, also insbesondere der Form der Apertur, im Ortsraum, eine entsprechende Verzerrung des Spektrums der Approximation 301 vorzunehmen - anstatt einer Verzerrung der im k-Raum kreisförmigen Form der Apertur. In anderen Worten kann - Bezug nehmend auf die voranstehend diskutierte Figur 1 der Publikation von G. Zheng - das unterliegende Spektrum anstatt der geometrischen Form der Systempupille verzerrt werden. Derart kann also z.B. eine Beleuchtung mit fokussierenden Strahlen zur Streckung der Detektions-NA vorgenommen werden. Es werden z.B. für einzelne Beleuchtungspositionen Strahlen in die Apertur gebeugt, die bei einer Beleuchtung mit einer ebenen Welle nicht durch die Detektions-NA passen würden.

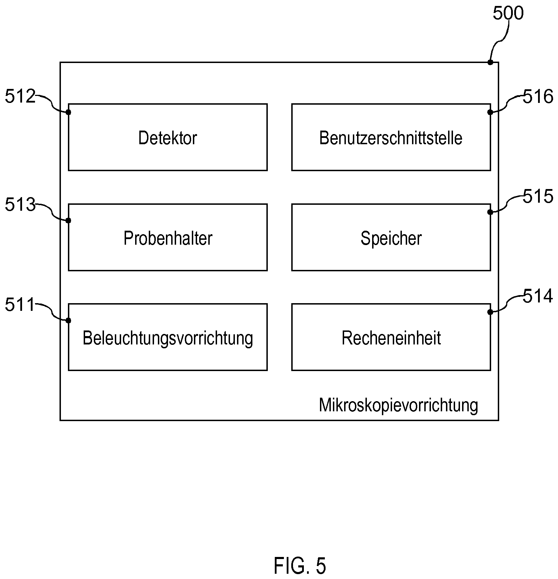

In FIG. 5 ist eine Mikroskopievorrichtung 500 dargestellt. Die Mikroskopievorrichtung 500 umfasst die Beleuchtungsvorrichtung 511 und den Detektor 512. Grundsätzlich können verschiedenste Beleuchtungsvorrichtungen 511 verwendet werden, um das Beleuchten des Objekts 100 durchzuführen. Insbesondere können Beleuchtungsvorrichtungen 511 verwendet werden, die das Beleuchten des Objekts 100 aus verschiedenen Beleuchtungsrichtungen 111-3 ermöglichen. Es kann z.B. ein Scan-Spiegel z.B. in einer Feldblendenebene der Beleuchtungsvorrichtung 511 verwendet werden. Es könnte auch eine adaptive Komponente in einer Apertur bzw. Beleuchtungspupille der Beleuchtungseinrichtung verwendet werden; z.B. könnte die Beleuchtungsvorrichtung 511 gemäß Deutscher Patentanmeldung 10 2014 101 219.4 verwendet werden. Es wäre auch möglich, dass die Beleuchtungsvorrichtung 511 ein LED-Array umfasst.

Der Strahlengang der Lichtstrahlen ist zwischen der Beleuchtungsvorrichtung 511 und dem Detektor 512 definiert. In dem Strahlengang befindet sich ein Probenhalter 513, der dazu verwendet werden kann, das Objekt 100 zu fixieren. Die Mikroskopievorrichtung 500 weist ferner eine Recheneinheit 514 auf und einen Speicher 515. Z.B. kann der Speicher 515 flüchtiger oder nicht flüchtiger Speicher sein. In dem Speicher 515 können Kontrollanweisungen hinterlegt sein, anhand derer die Recheneinheit 514 voranstehend beschriebene Techniken zum Bestimmen des Ergebnisbildes durchführen kann. Solche Techniken können insbesondere umfassen: Bestimmen und/oder Abrufen der Strahlformeigenschaften 111-1 - 111-3; Hinzufügen und Entfernen einer Wirkung der Strahlformeigenschaften 111-1 - 111-3 zur und aus der Approximation 301; Anwenden von Techniken der Fourier-Ptychographie im k-Raum zum Anpassen der Approximation 301; Bestimmen des Ergebnisbildes 303 basierend auf den Zwischenbildern 302; Fourier-Transformation und inverse Fourier-Transformation, etc. Während in FIG. 5 die Mikroskopievorrichtung 500 als eine Einheit gezeigt ist, wäre es im Allgemeinen möglich, dass z.B. der Speicher 515 und/oder die Recheneinheit 514 separate Elemente gegenüber den optischen Elementen 511-513 bilden. Die Mikroskopievorrichtung 500 umfasst weiterhin eine Benutzerschnittstelle 516, die eingerichtet ist, um Benutzereingaben zu empfangen und / oder um Benutzerausgaben an einen Benutzer bereit zu stellen. Z.B. kann die Benutzerschnittstelle 516 Elemente umfassen, die aus folgender Gruppe ausgewählt sind: eine Tastatur, eine Maus, ein Bildschirm, Sprach Ein-/Ausgabe, usf.

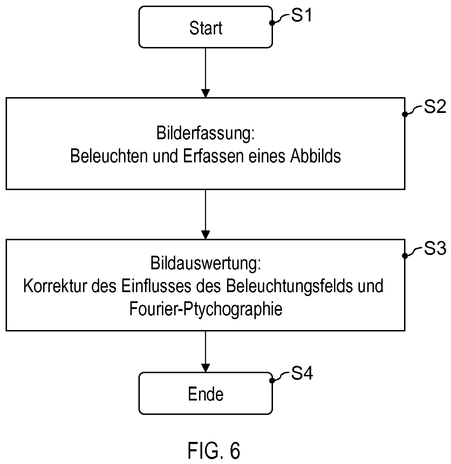

Mittels der Mikroskopievorrichtung 500 kann es möglich sein, das Verfahren gemäß FIG. 6 durchzuführen. Das Verfahren beginnt in Schritt S1. Zunächst wird in Schritt S2 die Bilderfassung durchgeführt. Dabei wird das Objekt 100 mit den verschiedenen Beleuchtungsfeldern 110-1 - 110-3 durch Betreiben der Beleuchtungsvorrichtung 511 der Mikroskopievorrichtung 500 beleuchtet. Gleichzeitig kann mit dem Detektor 512 der Mikroskopievorrichtung 500 das jeweilige Bild 201-1 - 201-3 des Objekts 100 während dem Beleuchten mit dem jeweiligen Beleuchtungsfeld 110-1 - 110-3 erfasst werden. In Schritt S2 wäre es optional weiterhin möglich, die Kalibrationssequenz zum Bestimmen der Strahlformeigenschaften 111-1 - 111-3 durchzuführen, z.B. vor dem Erfassen der Bilder 201-1 - 201-3.

Dann erfolgt in Schritt S3 die Bildauswertung. Im Rahmen der Bildauswertung in Schritt S3 wird für jedes der in Schritt S2 erfassten Bilder 201-1 - 201-3 die Wirkung der Strahlformeigenschaften 111-1 - 111-3 des jeweils zugeordneten Beleuchtungsfelds 101-1 - 101-3 zu der jeweiligen vorgegebenen Approximation 301 hinzugefügt. Dann wird die Approximation 301 mittels Techniken der Fourier-Ptychographie im k-Raum basierend auf dem jeweiligen Bild 201-1 - 201-3 angepasst. Anschließend wird die Wirkung der Strahlformeigenschaften 111-1 - 111-3 des jeweiligen Beleuchtungsfelds 101-1 - 101-3 aus der angepassten Approximation 301 des Objekts 100 im Bildraum entfernt und das Zwischenbild 302 erhalten. Das Zwischenbild 302 kann die vorgegebene Approximation 301 der Bildauswertung für das nächste Bild 201-1 - 201-3 bilden. In Schritt S3 ist es möglich, die Schritte zur Bildauswertung so lange für die verschiedenen Bilder 201-1 - 201-3 zu wiederholen, bis ein vorgegebenes Konvergenzkriterium für die Zwischenbilder 302 erfüllt ist. Das Konvergenzkriterium könnte z.B. eine Änderung zwischen den verschiedenen Zwischenbildern 302 sein, die geringer als ein vorgegebener Schwellenwert ist; entsprechend könnte das Konvergenzkriterium eine vorgegebene Anzahl von Durchführungen der verschiedenen Schritte der Bildauswertung für die verschiedenen Bilder 201-1 - 201-3 betreffen.

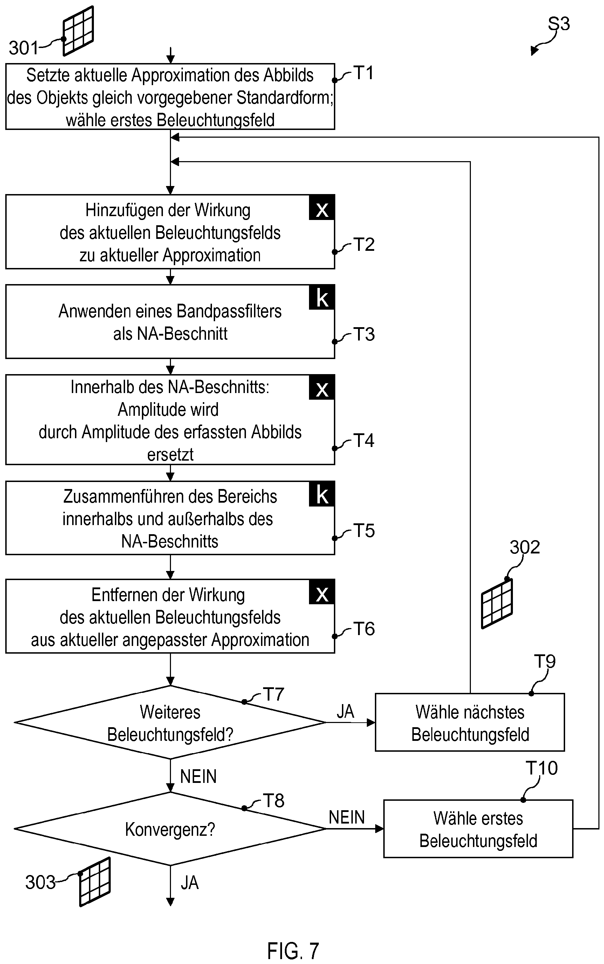

Insbesondere können die verschiedenen voranstehend genannten Schritte der Bildauswertung iterativ durchgeführt werden. Dies ist in FIG. 7 illustriert. FIG. 7 beschreibt insbesondere also Schritt S3 näher. Zunächst wird in Schritt T1 eine vorgegebene Standardform des Objekts 100 als vorgegebene Approximation 301 gewählt. Die Approximation entspricht also einer Schätzung des Objekts 100. Die Approximation 301 kann z.B. im Speicher 515 hinterlegt sein und / oder über die Benutzerschnittstelle 516 erhalten werden. Es wird ein aktuelles Beleuchtungsfeld 110-1 - 110-3 aus der Menge der Beleuchtungsfelder 110-1 - 110-3 ausgewählt. Dies entspricht dem Auswählen eines der Bilder 201-1 - 201-3, das für das jeweilige Beleuchtungsfeld 110-1 - 110-3 in Schritt S2 erfasst wurde.

Dann wird in Schritt T2 eine Wirkung des aktuellen Beleuchtungsfelds 110-1 - 110-3 zu der aktuellen Approximation 301 hinzugefügt, z.B. durch komplexwertige Multiplikation einer Phasen-/Amplitudenkarte. Dies geschieht im Bildraum (in FIG. 7 durch das weiße x auf schwarzem Grund illustriert).

Die derart angepasste aktuelle Approximation 301 wird dann in den k-Raum propagiert, denn Schritt T3 operiert im k-Raum (in FIG.7 durch das weiße k auf schwarzem Grund illustriert). Z.B. kann die Propagation in den k-Raum mittels einer Fast Fourier Transformationstechnik (FFT) erfolgen. Dies entspricht einer Transformation in die Systempupille als konjugierte Ebene der Mikroskopievorrichtung 500. In Schritt T3 wird dann der NA-Beschnitt durchgeführt. Dazu wird ein Bandpassfilter angewendet. Der Bandpassfilter kann z.B. ein Hochpassfilter sein. Typischerweise entspricht der NA-Beschnitt dem Ausschneiden eines kreisförmigen Bereichs, wobei die Position dieses kreisförmigen Bereichs durch die jeweilige Beleuchtungsrichtung 111-3 des jeweiligen Beleuchtungsfelds 110-1 - 110-3 vorgegeben sein kann. Insbesondere wenn eine Form und / oder Größe der verwendeten Apertur der Beleuchtungsvorrichtung bereits in Schnitt T2 berücksichtigt wird - z.B. durch entsprechendes Verzerren der Approximation 301 -, kann der Bereich kreisförmig sein. Grundsätzlich braucht in Schritt T4 keine Änderung des Bereichs außerhalb des NA-Beschnitts erfolgen. Es wäre aber z.B. möglich, Rauschen zu unterdrücken oder sonstige Operatoren auf diesen Bereich zu Verbesserung der Bildqualität anzuwenden.

Derjenige Teil des Spektrums der Approximation 301, der innerhalb des Bereichs liegt, d.h. der im NA-Beschnitt liegt, wird dann in Schritt T4 weiterverarbeitet. Dazu wird dieser Teil zunächst wieder in den Fokus der Mikroskopievorrichtung 500 propagiert, d.h. in den Bildraum überführt. Dann wird die Amplitude dieses Teils durch die Amplitude des jeweiligen Bilds 201-1 - 201-3 ersetzt. Die Amplitude entspricht typischerweise der Wurzel der Intensität. Insoweit kann also die aktuelle Approximation 301 basierend auf dem entsprechenden Bild 201-1- 201-3 angepasst werden.

Dann wird dieser angepasste Teil wieder in den k-Raum bzw. die Systempupille zurück propagiert und in Schritt T5 erfolgt das Zusammenführen der beiden Bereiche innerhalb des NA-Beschnitts - modifiziert in Schritt T4 - und außerhalb des NA-Beschnitts wie aus Schritt T3 erhalten. Dieses Zusammenführen kann filtergerecht geschehen, d.h. in Abhängigkeit des in Schritts T3 gewählten Bandpassfilters.
Dann wird die derart angepasste Approximation 301 wieder in den Bildraum propagiert, d.h. zurück auf die Objektebene zurück propagiert, z.B. mittels inverser FFT. Dort wird dann, in Schritt T6, die Wirkung des jeweiligen Beleuchtungsfelds 110-1 - 110-3 entfernt, z.B. durch komplexwertige Division. Dadurch wird das Zwischenbild 302 erhalten.

In Schritt T7 wird überprüft, ob ein weiteres Beleuchtungsfeld 110-1 - 110-3 vorhanden ist, d.h. ob ein weiteres Bild 201-1 - 201-3 zur Verbesserung der Schätzung des Objekts 100 berücksichtigt werden muss. Ist dies der Fall, so wird in Schritt T9 das nächste Beleuchtungsfeld 110-1 - 110-3 ausgewählt. Ferner wird als aktuelle Approximation 301 des dann aktuellen Bilds 201-1 - 201-3 zum Zwecke des Durchführens der Schritte T2 - T6 das Zwischenbild 302 aus Schritt T6 gewählt. In anderen Worten entspricht die Ausgabe des Durchführens der Schritte T2 - T7 für ein erstes Bild 201-1 - 201-3 der Eingabe des Durchführens der Schritte T2 - T7 für ein zweites Bild 201-1 - 201-3. Die vorgegebene Approximation 301, die für die Bildauswertung des zweiten Bilds 201-1 - 201-3 verwendet wird, entspricht dem Zwischenbild 302, das durch die Bildauswertung des ersten Bilds 201-1 - 201-3 erhalten wird.

Die Schritte T2 - T7 werden dann so lange durchgeführt, bis in Schritt T8 festgestellt wird, dass kein weiteres Beleuchtungsfeld 110-1 - 110-3 mehr vorhanden ist. In anderen Worten werden die Schritte T2 - T7 so lange durchgeführt, bis die Approximation 301 basierend auf allen Bildern 201-1 - 201-3 in Schritt T4 angepasst wurde.

Sobald dies der Fall ist, wird in Schritt T8 überprüft, ob ein vorgegebenes Konvergenzkriterium erfüllt ist. Ein einfaches Konvergenzkriterium könnte z.B. sein: Überprüfen, wie häufig Schritt T10 durchgeführt wurde. Typischerweise kann die Anpassung der Approximation 301 z.B. mehrfach basierend auf den verschiedenen Bildern 201-1 - 201-3 durchgeführt werden, z.B. etwa zweimal, dreimal oder fünfzigfach oder hundertfach oder noch häufiger. In anderen Worten kann also jedes Bild 201-1 - 201-3 mehrfach dazu verwendet werden, die Approximation 301 anzupassen. Ein weiteres Konvergenzkriterium, welches in Schritt T8 überprüft werden kann, wäre z.B. inwiefern sich die aktuelle Approximation 301 zwischen verschiedenen Iterationen des Durchführens der Schritte T2 - T7 verändert. Ist das Konvergenzkriterium in Schritt T8 nicht erfüllt, so wird in Schritt T10 wiederum das erste Beleuchtungsfeld 110-1 - 110-3 als das aktuelle Beleuchtungsfeld ausgewählt und die Schritte T2 - T7 und T9 werden erneut durchgeführt. Anderenfalls kann die aktuelle Approximation 301 bzw. das zuletzt erhaltene Zwischenbild 302 aus Schritt T6 als das Ergebnisbild 303 bestimmt werden. In einem solchen Fall wurde also jedes Zwischenbild 302 weiter in die nächste Schleife T2 - T6 propagiert und anhand des nächsten Bilds 201-1 - 201-3 verändert; deshalb basiert das Ergebnisbild 303 auf den Zwischenbildern 302 aller Bilder 201-1 - 201-3.

Bei den voranstehend beschriebenen Techniken werden die Aberrationen in Bezug auf die Schritte T2 und T6 berücksichtigt. Ergänzend wäre es auch möglich, Aberrationen der abbildenden Mikroskopievorrichtung 500 bei der Propagation zwischen Bildraum und k-Raum zwischen den Schritten T3 und T4, sowie den Schritten T4 und T5 zu berücksichtigen.

Die voranstehenden Techniken erlauben also eine Rekonstruktion eines Abbilds des Objekts 100 im Bildraum - wie aus FIG. 7 ersichtlich ist, wird jeweils das Zwischenbild 302 zwischen Iterationen für verschiedene Bilder 201-1 - 201-3 in Schritt T9 weiterpropagiert. Dies erlaubt ein besonders effizientes Berücksichtigen der Aberrationen in Schritten T2 und T6.

Voraussetzung für das Berücksichtigen der Wirkung der verschiedenen Beleuchtungsfeld 110-1 - 110-3 ist typischerweise eine Kenntnis über die Art und Eigenschaften der verschiedenen Strahlformeigenschaften 111-1 - 111-3. Die Strahlformeigenschaften 111-1 - 111-3 können z.B. aus dem Design der Mikroskopievorrichtung 500 bestimmt und vorgegeben sein. Es wäre aber auch möglich, diese im Rahmen einer Kalibrationssequenz zu bestimmen.

Zusammenfassend wurden voranstehend Techniken illustriert, welche es ermöglichen, ein hochauflösendes Ergebnisbild aus mehreren niedrig aufgelösten Bildern eines Objekts zu bestimmen - und zwar unter Berücksichtung von Strahlformeigenschaften der den Bildern zugeordneten Beleuchtungsfeldern. Dabei kann es möglich sein, die Strahlformeigenschaften zielgerichtet zu manipulieren und / oder baulich bedingte oder anderweitig fest vorgegebene Strahlformeigenschaften zu berücksichtigen. Insbesondere können Aberrationen der Beleuchtungsvorrichtung berücksichtigt werden. Durch die Möglichkeit der nachträglichen Korrektur von Aberrationen kann z.B. die Beleuchtungsvorrichtung und/oder der Detektor der Mikroskopievorrichtung kostengünstig implementiert werden oder im Optikdesign können auf andere Art und Weise Parameter optimiert werden. Z.B. kann eine günstigere oder robustere Beleuchtungsvorrichtung und/oder Detektor implementiert werden. Es können weniger Justage-Schritte zur Einstellung der Mikroskopievorrichtung benötigt werden. Es können z.B. insbesondere auch Mikroskopievorrichtungen verwendet werden, die keine ebenen Beleuchtungswellen erzeugen. Dies kann eine einfachere Implementierung der Beleuchtungsvorrichtung ermöglichen. Es kann ferner möglich sein, insgesamt eine kürzere Zeit zum Durchführen der Verfahrensschritte, die zum Bestimmen des Ergebnisbildes notwendig sind, zu benötigen. D.h. schnellere Messungen können durch alternative Messkonzepte möglich werden. Insbesondere kann es z.B. möglich sein, einen Überlappbereich zwischen verschiedenen Beleuchtungsfeldern frei zu strukturieren, etwa durch gezieltes Einbringen von Beleuchtungsaberrationen oder im Allgemeinen durch gezieltes Modifizieren von Strahlformeigenschaften. Ferner kann eine vergleichsweise einfache Kombinierbarkeit mit bestehenden Beleuchtungskonzepten und -vorrichtungen möglich sein. Insbesondere kann es entbehrlich sein, die Beleuchtungsvorrichtung derart einzurichten, dass sie ebene Beleuchtungswellen bereitzustellen. Eine homogene Ausleuchtung des Objekts kann entbehrlich sein. Daher können die voranstehend diskutierten Techniken insbesondere mit beliebigen quasi-kohärenten Beleuchtungsvorrichtungen kombiniert werden, insbesondere nicht nur mit köhlerschen Beleuchtungsvorrichtungen; ferner können kritische Beleuchtungskonzepte verwendet werden. Eine Genauigkeit im Rekonstruieren des Abbilds des Objekts kann gegenüber der herkömmlichen Fourier-Ptychographie erhöht sein. Insbesondere kann es möglich sein, dass eine Qualität des Ergebnisbilds im Vergleich zur herkömmlichen Fourier-Ptychographie erhöht wird. Dies kann dadurch erreicht werden, dass verschiedene Aberrationen der Beleuchtungsvorrichtung und/oder der Detektionsvorrichtung korrigierbar sind.

### Bezugszeichenliste

- S1 - S4: Schritt
- T1 - T10: Schritt
- 100: Objekt
- 110-1 - 110-3: Beleuchtungsfeld
- 111-1 - 111-3: Strahlformeigenschaft
- 120: Optische Achse
- 201-1 - 201-3: Bild
- 301: Approximation
- 302: Zwischenbild
- 303: Ergebnisbild
- 311: Erste Auflösung
- 312: Zweite Auflösung
- 500: Mikroskopievorrichtung
- 511: Beleuchtungsvorrichtung
- 512: Detektor
- 513: Probenhalter
- 514: Recheneinheit
- 515: Speicher
- 516: Benutzerschnittstelle

## Patentansprüche

1. Verfahren zum Abbilden eines Objekts (100) mit einer Mikroskopievorrichtung (500), wobei das Verfahren umfasst:
- Erhalten von mindestens zwei Bildern (201-1 - 201-3) des Objekts (100), die eine erste Auflösung (311) aufweisen,
wobei den mindestens zwei Bildern (201-1 - 201-3) jeweils ein Beleuchtungsfeld (110-1, 110-2, 110-3) zugeordnet ist, das bei Bilderfassung des jeweiligen Bilds (201-1 - 201-3) das Objekt (100) beleuchtet und das mit vorgegeben Strahlformeigenschaften (111-1, 111-2, 111-3) assoziiert ist, welche Aberrationen des jeweiligen Beleuchtungsfelds beschreiben,
wobei das Verfahren für jedes der mindestens zwei Bilder (201-1 - 201-3) folgende Schritte zur Bildauswertung umfasst:
- Durchführen einer ersten Rechenoperation zum Hinzufügen einer Wirkung der Strahlformeigenschaften (111-1, 111-2, 111-3) des dem jeweiligen Bild zugeordneten Beleuchtungsfelds (110-1, 110-2, 110-3) zu einer vorgegebenen Approximation (301) des Objekts (100) im Bildraum,
wobei die Approximation (301) eine zweite Auflösung (312) aufweist, die größer als die erste Auflösung (311) ist,
- Anpassen der Approximation (301) mittels Techniken der Fourier-Ptychographie im k-Raum basierend auf dem jeweiligen Bild (201-1 - 201-3),
- Durchführen einer zweiten Rechenoperation zum Entfernen der Wirkung der Strahlformeigenschaften (111-1, 111-2, 111-3) des dem jeweiligen Bild zugeordneten Beleuchtungsfelds (110-1, 110-2, 110-3) aus der angepassten Approximation (301) des Objekts (100) im Bildraum zum Erhalten eines Zwischenbilds (302),
wobei das Verfahren weiterhin umfasst:
- Bestimmen eines Ergebnisbilds (303) basierend auf den Zwischenbildern (302), die den mindestens zwei Beleuchtungsfeldern (110-1, 110-2, 110-3) zugeordnet sind,
wobei die vorgegebene Approximation (301), die für die Bildauswertung eines ersten Bilds (201-1 - 201-3) des Objekts (100) verwendet wird, dem Zwischenbild (302) entspricht, das durch die Bildauswertung eines zweiten Bilds (201-1 - 201-3) des Objekts (100) erhalten wird,
wobei die Techniken der Fourier-Ptychographie Bildpunktwerte der Approximation (301) in einem bestimmten Bereich durch Bildpunktwerte des jeweiligen Bilds (201-1 - 201-3) ersetzen,
wobei der bestimmte Bereich einer Systempupille des jeweiligen Beleuchtungsfelds (110-1, 110-2, 110-3) im k-Raum entspricht.

2. Verfahren nach Anspruch 1,
wobei die Schritte zur Bildauswertung solange für die mindestens zwei Bilder (201-1 - 201-3) wiederholt werden, bis ein vorgegebenes Konvergenzkriterium, das die Zwischenbilder (302) betrifft, erfüllt ist.

3. Verfahren nach einem der voranstehenden Ansprüche,
wobei die Beleuchtungsfelder der mindestens zwei Bilder (201-1 -201-3) nicht nur ebene Wellen umfassen.

4. Verfahren nach einem der voranstehenden Ansprüche,
wobei die Strahlformeigenschaften (111-1, 111-2, 111-3) aus folgender Gruppe ausgewählt sind: eine ortsabhängige Amplitude (111-1) und / oder Phase des Beleuchtungsfelds (110-1, 110-2, 110-3); eine Form der Apertur (111-2) einer Beleuchtungsvorrichtung (511) der Mikroskopievorrichtung (500); eine Beleuchtungsrichtung (111-3) in Bezug auf das Objekt (100); ein Astigmatismus; eine Wölbung; eine Verzeichnung.

5. Verfahren nach Anspruch 4,
wobei die ortsabhängige Amplitude (111-1) des Beleuchtungsfelds (110-1, 110-2, 110-3) durch eine gausförmige Funktion beschrieben wird und / oder
wobei die ortsabhängige Amplitude (111-1) des Beleuchtungsfelds (110-1, 110-2, 110-3) durch eine Nicht-Köhlersche Beleuchtungsvorrichtung (511) der Mikroskopievorrichtung (500) und / oder durch die Beleuchtungsvorrichtung (511) der Mikroskopievorrichtung (500) mit kritischer Beleuchtung vorgegeben ist.

6. Verfahren nach Anspruch 4 oder 5,
wobei die Form der Apertur durch eine Zoomvorrichtung der Mikroskopievorrichtung (500) für die mindestens zwei Beleuchtungsfelder (110-1, 110-2, 110-3) vorgeben wird.

7. Verfahren nach Anspruch 3 und 6,
wobei die Form der Apertur in Abhängigkeit von Beleuchtungsrichtungen (111-3) der mindestens zwei Beleuchtungsfelder (110-1, 110-2, 110-3) vorgegeben wird, sodass sich die Systempupillen von jeweils zwei der mindestens zwei Beleuchtungsfelder (110-1, 110-2, 110-3) wechselseitig überlappen.

8. Verfahren nach einem der voranstehenden Ansprüchen,
wobei zumindest einige oder alle der mindestens zwei Beleuchtungsfelder (110-1, 110-2, 110-3) mit gleichen Beleuchtungsrichtungen (111-3) assoziiert sind, die mit der optischen Achse (120) der Mikroskopievorrichtung (500) einen endlichen Winkel einschließen.

9. Verfahren nach einem der voranstehenden Ansprüche,
wobei das Verfahren weiterhin umfasst:
- Durchführen einer Kalibrationssequenz zum Bestimmen der Strahlformeigenschaften (111-1, 111-2, 111-3) der mindestens zwei Beleuchtungsfelder (110-1, 110-2, 110-3).

10. Verfahren nach einem der voranstehenden Ansprüche,
wobei das Verfahren für jedes der mindestens zwei Bilder (201-1 - 201-3) umfasst:
- Beleuchten des Objekts (100) mit dem jeweiligen Beleuchtungsfeld (110-1, 110-2, 110-3) durch Betreiben einer Beleuchtungsvorrichtung (511) der Mikroskopievorrichtung (500),
- mit einem Detektor (512) der Mikroskopievorrichtung (500) Erfassen des jeweiligen Bilds (201-1 - 201-3) des Objekts (100) während dem Beleuchten mit dem jeweiligen Beleuchtungsfeld (110-1, 110-2, 110-3).

11. Mikroskopievorrichtung (500), die zum Abbilden eines Objekts (100) eingerichtet ist,
wobei die Mikroskopievorrichtung umfasst:
- eine Recheneinheit (514), die eingerichtet ist, um mindestens zwei Bilder (201-1 - 201-3) des Objekts (100), die eine erste Auflösung (311) aufweisen, zu erhalten,
wobei den mindestens zwei Bildern (201-1 - 201-3) jeweils ein Beleuchtungsfeld (110-1, 110-2, 110-3) zugeordnet ist, das bei Bilderfassung des jeweiligen Bilds (201-1 - 201-3) das Objekt (100) beleuchtet und das mit vorgegeben Strahlformeigenschaften (111-1, 111-2, 111-3) assoziiert ist, welche Aberrationen des jeweiligen Beleuchtungsfelds beschreiben,
wobei die Recheneinheit (514) weiterhin eingerichtet ist, um für jedes der mindestens zwei Bilder (201-1 - 201-3) folgende Schritte zur Bildauswertung durchzuführen:
- Durchführen einer ersten Rechenoperation zum Hinzufügen einer Wirkung der Strahlformeigenschaften (111-1, 111-2, 111-3) des jeweils zugeordneten Beleuchtungsfelds (110-1, 110-2, 110-3) zu einer vorgegebenen Approximation (301) des Objekts (100) im Bildraum,
wobei die Approximation (301) eine zweite Auflösung (312) aufweist, die größer als die erste Auflösung (311) ist,
- Anpassen der Approximation (301) mittels Techniken der Fourier-Ptychographie basierend auf dem jeweiligen Bild (201-1 - 201-3),
- Durchführen einer zweiten Rechenoperation zum Entfernen der Wirkung der Strahlformeigenschaften (111-1, 111-2, 111-3) des dem jeweiligen Bild zugeordneten Beleuchtungsfelds (110-1, 110-2, 110-3) aus der angepassten Approximation (301) des Objekts (100) im Bildraum zum Erhalten eines Zwischenbilds (302),
wobei die Recheneinheit (514) weiterhin eingerichtet ist, um ein Ergebnisbild (303) basierend auf den Zwischenbildern (302), die den mindestens zwei Beleuchtungsfeldern (110-1, 110-2, 110-3) zugeordnet sind, zu bestimmen,
wobei die vorgegebene Approximation (301), die für die Bildauswertung eines ersten Bilds (201-1 - 201-3) des Objekts (100) verwendet wird, dem Zwischenbild (302) entspricht, das durch die Bildauswertung eines zweiten Bilds (201-1 - 201-3) des Objekts (100) erhalten wird,
wobei die Techniken der Fourier-Ptychographie Bildpunktwerte der Approximation (301) in einem bestimmten Bereich durch Bildpunktwerte des jeweiligen Bilds (201-1 - 201-3) ersetzen,
wobei der bestimmte Bereich einer Systempupille des jeweiligen Beleuchtungsfelds (110-1, 110-2, 110-3) im k-Raum entspricht.

12. Mikroskopievorrichtung (500) nach Anspruch 11,
wobei die Mikroskopievorrichtung (500) weiterhin eingerichtet ist, um ein Verfahren nach einem der Ansprüche 2 - 10 durchzuführen.

## Claims

1. Method for imaging an object (100) using a microscopy apparatus (500),
wherein the method comprises:
- obtaining at least two images (201-1 - 201-3) of the object (100) which have a first resolution (311),
wherein an illumination field (110-1, 110-2, 110-3) is respectively assigned to the at least two images (201-1 - 201-3), which illumination field illuminates the object (100) during capture of the respective image (201-1 - 201-3) and is associated with predefined beam shaping properties (111-1, 111-2, 111-3) which describe aberrations of the respective illumination field,
wherein the method comprises the following image evaluation steps for each of the at least two images (201-1 - 201-3):
- carrying out a first computing operation in order to add an effect of the beam shaping properties (111-1, 111-2, 111-3) of the illumination field (110-1, 110-2, 110-3) assigned to the respective image to a predefined approximation (301) of the object (100) in the image space,
wherein the approximation (301) has a second resolution (312) which is greater than the first resolution (311),
- adapting the approximation (301) by means of Fourier ptychography techniques in the k-space on the basis of the respective image (201-1 - 201-3),
- carrying out a second computing operation in order to remove the effect of the beam shaping properties (111-1, 111-2, 111-3) of the illumination field (110-1, 110-2, 110-3) assigned to the respective image from the adapted approximation (301) of the object (100) in the image space in order to obtain an intermediate image (302),
wherein the method also comprises:
- determining a result image (303) on the basis of the intermediate images (302) assigned to the at least two illumination fields (110-1, 110-2, 110-3),
wherein the predefined approximation (301) which is used to evaluate a first image (201-1 - 201-3) of the object (100) corresponds to the intermediate image (302) obtained by evaluating a second image (201-1 - 201-3) of the object (100),
wherein the Fourier ptychography techniques replace pixel values of the approximation (301) in a particular region with pixel values of the respective image (201-1 - 201-3),
wherein the particular region corresponds to a system pupil of the respective illumination field (110-1, 110-2, 110-3) in the k-space.

2. Method according to Claim 1,
wherein the image evaluation steps are repeated for the at least two images (201-1 - 201-3) until a predefined convergence criterion relating to the intermediate images (302) is satisfied.

3. Method according to one of the preceding claims,
wherein the illumination fields of the at least two images (201-1 - 201-3) do not only comprise plane waves.

4. Method according to one of the preceding claims,
wherein the beam shaping properties (111-1, 111-2, 111-3) are selected from the following group: a location-dependent amplitude (111-1) and/or phase of the illumination field (110-1, 110-2, 110-3); a shape of the aperture (111-2) of an illumination apparatus (511) of the microscopy apparatus (500); an illumination direction (111-3) with respect to the object (100); an astigmatism; a curvature; a distortion.

5. Method according to Claim 4,
wherein the location-dependent amplitude (111-1) of the illumination field (110-1, 110-2, 110-3) is described by a Gaussian function, and/or
wherein the location-dependent amplitude (111-1) of the illumination field (110-1, 110-2, 110-3) is predefined by a non-Kohler illumination apparatus (511) of the microscopy apparatus (500) and/or by the illumination apparatus (511) of the microscopy apparatus (500) with critical illumination.

6. Method according to Claim 4 or 5,
wherein the shape of the aperture is predefined by a zoom apparatus of the microscopy apparatus (500) for the at least two illumination fields (110-1, 110-2, 110-3).

7. Method according to Claims 3 and 6,
wherein the shape of the aperture is predefined on the basis of illumination directions (111-3) of the at least two illumination fields (110-1, 110-2, 110-3), with the result that the system pupils of in each case two of the at least two illumination fields (110-1, 110-2, 110-3) mutually overlap.

8. Method according to one of the preceding claims,
wherein at least some or all of the at least two illumination fields (110-1, 110-2, 110-3) are associated with the same illumination directions (111-3) which enclose a finite angle with the optical axis (120) of the microscopy apparatus (500).

9. Method according to one of the preceding claims,
wherein the method also comprises:
- carrying out a calibration sequence in order to determine the beam shaping properties (111-1, 111-2, 111-3) of the at least two illumination fields (110-1, 110-2, 110-3).

10. Method according to one of the preceding claims,
wherein the method comprises for each of the at least two images (201-1 - 201-3):
- illuminating the object (100) with the respective illumination field (110-1, 110-2, 110-3) by operating an illumination apparatus (511) of the microscopy apparatus (500),
- using a detector (512) of the microscopy apparatus (500) to capture the respective image (201-1 - 201-3) of the object (100) during illumination with the respective illumination field (110-1, 110-2, 110-3).

11. Microscopy apparatus (500) which is configured to image an object (100),
wherein the microscopy apparatus comprises:
- a computing unit (514) which is configured to obtain at least two images (201-1 - 201-3) of the object (100) which have a first resolution (311),
wherein an illumination field (110-1, 110-2, 110-3) is respectively assigned to the at least two images (201-1 - 201-3), which illumination field illuminates the object (100) during capture of the respective image (201-1 - 201-3) and is associated with predefined beam shaping properties (111-1, 111-2, 111-3) which describe aberrations of the respective illumination field,
wherein the computing unit (514) is also configured to carry out the following image evaluation steps for each of the at least two images (201-1 - 201-3):
- carrying out a first computing operation in order to add an effect of the beam shaping properties (111-1, 111-2, 111-3) of the respectively assigned illumination field (110-1, 110-2, 110-3) to a predefined approximation (301) of the object (100) in the image space,
wherein the approximation (301) has a second resolution (312) which is greater than the first resolution (311),
- adapting the approximation (301) by means of Fourier ptychography techniques on the basis of the respective image (201-1 - 201-3),
- carrying out a second computing operation in order to remove the effect of the beam shaping properties (111-1, 111-2, 111-3) of the illumination field (110-1, 110-2, 110-3) assigned to the respective image from the adapted approximation (301) of the object (100) in the image space in order to obtain an intermediate image (302),
wherein the computing unit (514) is also configured to determine a result image (303) on the basis of the intermediate images (302) assigned to the at least two illumination fields (110-1, 110-2, 110-3),
wherein the predefined approximation (301) which is used to evaluate a first image (201-1 - 201-3) of the object (100) corresponds to the intermediate image (302) obtained by evaluating a second image (201-1 - 201-3) of the object (100),
wherein the Fourier ptychography techniques replace pixel values of the approximation (301) in a particular region with pixel values of the respective image (201-1 - 201-3),
wherein the particular region corresponds to a system pupil of the respective illumination field (110-1, 110-2, 110-3) in the k-space.

12. Microscopy apparatus (500) according to Claim 11,
wherein the microscopy apparatus (500) is also configured to carry out a method according to one of Claims 2-10.

## Revendications

1. Procédé pour représenter un objet (100) avec un dispositif de microscopie (500), le procédé comprenant :
- L'obtention d'au moins deux images (201-1 - 201-3) de l'objet (100), qui possèdent une première résolution (311),
un champ d'éclairage (110-1, 110-2, 110-3) étant respectivement associé aux au moins deux images (201-1 - 201-3), lequel éclaire l'objet (100) lors de l'acquisition d'image de l'image (201-1 - 201-3) respective et lequel est associé à des propriétés de forme de faisceau (111-1, 111-2, 111-3) prédéfinies qui décrivent des aberrations du champ d'éclairage respectif, le procédé comprenant les étapes d'interprétation d'image suivantes pour chacune des au moins deux images (201-1 - 201-3) :
- réalisation d'une première opération de calcul en vue d'ajouter un effet des propriétés de forme de faisceau (111-1, 111-2, 111-3) du champ d'éclairage (110-1, 110-2, 110-3) associé à l'image respective à une approximation (301) prédéfinie de l'objet (100) dans l'espace d'image,
l'approximation (301) possédant une deuxième résolution (312) qui est supérieure à la première résolution (311),
- adaptation de l'approximation (301) au moyen des techniques de la ptychographie de Fourier dans l'espace k en se basant sur l'image (201-1 - 201-3) respective,
- réalisation d'une deuxième opération de calcul en vue de supprimer l'effet des propriétés de forme de faisceau (111-1, 111-2, 111-3) du champ d'éclairage (110-1, 110-2, 110-3) associé à l'image respective de l'approximation (301) adaptée de l'objet (100) dans l'espace d'image en vue d'obtenir une image intermédiaire (302),
le procédé comprenant en outre :
- la détermination d'une image de résultat (303) basée sur les images intermédiaires (302) qui sont associées aux au moins deux champs d'éclairage (110-1, 110-2, 110-3),
l'approximation (301) prédéfinie, qui est utilisée pour l'interprétation d'image d'une première image (201-1 - 201-3) de l'objet (100), correspondant à l'image intermédiaire (302) qui est obtenue par l'interprétation d'image d'une deuxième image (201-1 - 201-3) de l'objet (100),
les techniques de la ptychographie de Fourier remplaçant des valeurs de pixel de l'approximation (301) dans une zone déterminée par des valeurs de pixel de l'image (201-1 - 201-3) respective,
la zone déterminée correspondant à une pupille de système du champ d'éclairage (110-1, 110-2, 110-3) respectif dans l'espace k.

2. Procédé selon la revendication 1, les étapes d'interprétation d'image étant répétées pour les au moins deux images (201-1 - 201-3) jusqu'à ce qu'un critère de convergence prédéfini, qui concerne l'image intermédiaire (302), soit satisfait.

3. Procédé selon l'une des revendications précédentes, les champs d'éclairage des au moins deux images (201-1 - 201-3) ne comprenant pas que des ondes planes.

4. Procédé selon l'une des revendications précédentes, les propriétés de forme de faisceau (111-1, 111-2, 111-3) étant sélectionnées parmi le groupe suivant : une amplitude (111-1) et/ou phase du champ d'éclairage (110-1, 110-2, 110-3) dépendantes du lieu ; une forme de l'ouverture (111-2) d'un dispositif d'éclairage (511) du dispositif de microscopie (500) ; une direction d'éclairage (111-3) en référence à l'objet (100) ; un astigmatisme ; une cambrure ; une distorsion d'image.

5. Procédé selon la revendication 4,
l'amplitude dépendante du lieu (111-1) du champ d'éclairage (110-1, 110-2, 110-3) étant décrite par une fonction gaussienne et/ou
l'amplitude dépendante du lieu (111-1) du champ d'éclairage (110-1, 110-2, 110-3) étant prédéfinie par un dispositif d'éclairage (511) non de Kohler du dispositif de microscopie (500) et/ou par le dispositif d'éclairage (511) du dispositif de microscopie (500) avec éclairage critique.

6. Procédé selon la revendication 4 ou 5, la forme de l'ouverture étant prédéfinie par un dispositif de grossissement du dispositif de microscopie (500) pour les au moins deux champs d'éclairage (110-1, 110-2, 110-3).

7. Procédé selon les revendications 3 et 6, la forme de l'ouverture étant prédéfinie en fonction des directions d'éclairage (111-3) des au moins deux champs d'éclairage (110-1, 110-2, 110-3), de sorte que les pupilles de système de deux respectifs des au moins deux champs d'éclairage (110-1, 110-2, 110-3) se chevauchent mutuellement.

8. Procédé selon l'une des revendications précédentes, au moins certains ou la totalité des au moins deux champs d'éclairage (110-1, 110-2, 110-3) ayant des directions d'éclairage (111-3) identiques étant assortis, lesquels forment un angle fini avec l'axe optique (120) du dispositif de microscopie (500).

9. Procédé selon l'une des revendications précédentes, le procédé comprenant en outre :
- la réalisation d'une séquence d'étalonnage en vue de déterminer les propriétés de forme de faisceau (111-1, 111-2, 111-3) des au moins deux champs d'éclairage (110-1, 110-2, 110-3).

10. Procédé selon l'une des revendications précédentes, le procédé comprenant, pour chacune des au moins deux images (201-1 - 201-3) :
- l'éclairage de l'objet (100) avec le champ d'éclairage (110-1, 110-2, 110-3) respectif en faisant fonctionner un dispositif d'éclairage (511) du dispositif de microscopie (500),
- avec un détecteur (512) du dispositif de microscopie (500), l'acquisition de l'image (201-1 - 201-3) respective de l'objet (100) pendant l'éclairage avec le champ d'éclairage (110-1, 110-2, 110-3) respectif.

11. Dispositif de microscopie (500), qui est conçu pour représenter un objet (100), le dispositif de microscopie comprenant :
- une unité de calcul (514), qui est conçue pour obtenir au moins deux images (201-1 - 201-3) de l'objet (100), qui possèdent une première résolution (311),
un champ d'éclairage (110-1, 110-2, 110-3) étant respectivement associé aux au moins deux images (201-1 - 201-3), lequel éclaire l'objet (100) lors de l'acquisition d'image de l'image (201-1 - 201-3) respective et lequel est associé à des propriétés de forme de faisceau (111-1, 111-2, 111-3) prédéfinies qui décrivent des aberrations du champ d'éclairage respectif, l'unité de calcul (514) étant en outre conçue pour exécuter les étapes d'interprétation d'image suivantes pour chacune des au moins deux images (201-1 - 201-3) :
- réalisation d'une première opération de calcul en vue d'ajouter un effet des propriétés de forme de faisceau (111-1, 111-2, 111-3) du champ d'éclairage (110-1, 110-2, 110-3) respectivement associé à une approximation (301) prédéfinie de l'objet (100) dans l'espace d'image,
l'approximation (301) possédant une deuxième résolution (312) qui est supérieure à la première résolution (311),
- adaptation de l'approximation (301) au moyen des techniques de la ptychographie de Fourier en se basant sur l'image (201-1 - 201-3) respective,
- réalisation d'une deuxième opération de calcul en vue de supprimer l'effet des propriétés de forme de faisceau (111-1, 111-2, 111-3) du champ d'éclairage (110-1, 110-2, 110-3) associé à l'image respective de l'approximation (301) adaptée de l'objet (100) dans l'espace d'image en vue d'obtenir une image intermédiaire (302),
l'unité de calcul (514) étant en outre conçue pour déterminer une image de résultat (303) basée sur les images intermédiaires (302) qui sont associées aux au moins deux champs d'éclairage (110-1, 110-2, 110-3), l'approximation (301) prédéfinie, qui est utilisée pour l'interprétation d'image d'une première image (201-1 - 201-3) de l'objet (100), correspondant à l'image intermédiaire (302) qui est obtenue par l'interprétation d'image d'une deuxième image (201-1 - 201-3) de l'objet (100),
les techniques de la ptychographie de Fourier remplaçant des valeurs de pixel de l'approximation (301) dans une zone déterminée par des valeurs de pixel de l'image (201-1 - 201-3) respective,
la zone déterminée correspondant à une pupille de système du champ d'éclairage (110-1, 110-2, 110-3) respectif dans l'espace k.

12. Dispositif de microscopie (500) selon la revendication 11, le dispositif de microscopie (500) étant en outre conçu pour mettre en œuvre un procédé selon l'une des revendications 2 à 10.
